# FASCICULE DE BREVET EUROPEEN

(11) **EP 3 826 903 B1**
(45) Date de publication et mention de la délivrance du brevet: **22.01.2025**
(21) Numéro de dépôt: 19742851.9
(22) Date de dépôt: 07.06.2019
(51) Int. Cl.: B62D 21/15, B62D 25/08

(54) **SUPPORT DE MONTAGE D'UNE TRAVERSE DE SOUTIEN D'UN GROUPE MOTOPROPULSEUR D'UN VÉHICULE AUTOMOBILE, MUNI D'UN IMPACTEUR**
HALTERUNG ZUR BEFESTIGUNG EINES QUERTRÄGERS ZUR ABSTÜTZUNG EINES ANTRIEBSSTRANGS EINES KRAFTFAHRZEUGS, AUSGESTATTET MIT EINEM IMPAKTOR
BRACKET FOR MOUNTING A CROSSMEMBER FOR SUPPORTING A POWERTRAIN OF A MOTOR VEHICLE, PROVIDED WITH AN IMPACTOR

(30) Priorité: 25.07.2018 FR 1856901
(43) Date de publication de la demande: 02.06.2021
(73) Titulaire: Stellantis Auto SAS, 78300 Poissy (FR)
(72) Inventeur: DANIEL, Nicolas, 78730 St Arnoult En Yvelines (FR); LE BLAY, Marie Dominique, 78830 Bonnelles (FR); FERRO, Jose Christophe, 92140 Clamart (FR); MINELLI, Jérôme, 92250 La Garenne Colombes (FR); PINSON, Mathieu, 77400 Thorigny sur Marne (FR)
(74) Mandataire: PSIP
(86) Numéro de dépôt international: PCT/FR2019/051370
(87) Numéro de publication internationale: WO 2020/021171

(56) Documents cités:
- EP-A1- 2 927 097
- DE-A1- 102014 008 086
- FR-A1- 2 981 620
- FR-A1- 2 990 400
- FR-A1- 2 997 673
- JP-A- 2004 231 018
- US-A1- 2013 249 243

## Description

La présente invention relève des aménagements d'un châssis de véhicule automobile visant, en cas de choc supporté essentiellement longitudinalement par le véhicule, à contenir sa déformation et/ou la déformation d'une structure montée sur le châssis telle que notamment une structure porteuse d'un groupe motopropulseur du véhicule. De tels aménagements visent essentiellement à protéger les passagers installés dans l'habitacle du véhicule.

Les véhicules automobiles sont équipés d'un groupe motopropulseur fournissant l'énergie nécessaire à sa propulsion. Le groupe motopropulseur est installé sur une structure porteuse montée sur le châssis du véhicule, tel que par exemple couramment agencée en berceau. Selon des modalités particulières, la structure porteuse comporte une traverse de soutien du groupe motopropulseur qui est fixée à ses extrémités sur la structure porteuse via des supports.

Il se pose dès lors le problème d'une protection des passagers du véhicule en cas de choc supporté par le châssis essentiellement suivant sa direction longitudinale d'extension. Un tel choc longitudinal provoque une déformation potentiellement conséquente des éléments d'armature du châssis et un déplacement du groupe motopropulseur vers l'habitacle.

Il est connu de limiter le déplacement du groupe motopropulseur installé sur la structure porteuse via un impacteur de choc, tel qu'il ressort par exemple du document publié le 26/04/2013 sous le numéro FR 2 981 620 A (PEUGEOT CITROEN AUTOMOBILE). Selon ce document, l'impacteur est fixé en partie basse du groupe motopropulseur et prend appui contre la structure porteuse du groupe motopropulseur. En cas de choc supporté par le châssis, une déformation de l'impacteur amortit les efforts générés par le choc ce qui permet de limiter un déplacement du groupe motopropulseur sur la structure porteuse en direction de l'habitacle.

On connait en outre le document de brevet DE-A1 -102014008086 ou FR-A1-2997673 une structure de véhicule automobile conforme au préambule de la revendication 1.

Dans ce contexte, l'invention porte plus spécifiquement sur l'aménagement d'un support de montage sur le châssis d'un véhicule automobile, d'une traverse de soutien d'un groupe motopropulseur dudit véhicule.

Le but de l'invention est de résoudre au moins partiellement le problème posé par un potentiel déplacement du groupe motopropulseur vers l'habitacle du véhicule, en cas de choc longitudinalement supporté par le châssis.

Il est plus spécifiquement visé de procurer une telle limitation de mobilité du groupe motopropulseur vers l'habitacle, y compris dans le cas où ledit choc appliqué contre le châssis est un choc longitudinal décalé. Il est compris par choc longitudinal décalé un choc longitudinal sensiblement incliné par rapport à la direction longitudinale du châssis, en direction d'un côté latéral droit ou gauche du châssis. Un tel choc longitudinal décalé est alors générateur d'une composante de poussée transversale contre le châssis qui est potentiellement significative.

Un autre but de l'invention est de résoudre ledit problème posé en prenant en compte des contraintes susceptibles de rendre rédhibitoire une solution potentielle. De telles contraintes comprennent notamment, à titre non restrictif et isolément ou en combinaison :
- une limitation du coût d'obtention du véhicule dans le contexte d'une concurrence économique notoirement sévère dans le domaine automobile. Il est notamment visé la recherche d'une solution qui soit structurellement simple et/ou qui évite de complexifier les modalités de montage sur le châssis des organes qu'elle met en oeuvre. Il est notamment à tenir compte de l'environnement encombré du compartiment moteur logeant le groupe motopropulseur. Un tel environnement encombré est susceptible de faire obstacle à l'implantation sur le véhicule d'un moyen permettant de résoudre en tout ou partie le problème posé.
- une limitation de la masse du véhicule. Il est notamment à éviter d'accroître significativement la masse du véhicule par suite de l'apport d'un moyen permettant de résoudre en tout ou partie ledit problème posé.

Des notions sont communément comprises dans le domaine automobile, notamment en ce qui concerne les directions d'extension d'un véhicule automobile et donc du châssis qu'il comprend. De telles notions seront utilisées pour décrire l'invention, notamment en ce qui concerne le châssis et/ou la disposition relative sur le châssis des éléments ou organes qu'il comprend et/ou dont il est équipé, sauf précision contraire.

Pour rappel, les directions d'extension d'un véhicule sont communément définies dans un repère orthonormé identifié suivant une direction longitudinale, une direction transversale et une direction verticale. La notion longitudinal est considérée entre l'avant et l'arrière du véhicule par rapport à la station du conducteur qui fait face à la direction d'avancement du véhicule vers l'avant. La notion transversal est considérée suivant une direction d'extension du véhicule entre ses côtés latéraux droit et gauche considérés par rapport à la station du conducteur en position de conduite du véhicule. La notion vertical est considérée suivant une direction en élévation du véhicule par rapport à son plan de roulage au sol. Par suite, les notions inférieur et supérieur, ou autres notions apparentées comme par exemple sous et/ou dessous ainsi que sur et/ou dessus, sont des notions relatives considérées au regard de la notion de verticalité par rapport au plan de roulage du véhicule au sol.

Les buts visés par la présente invention sont atteints isolément ou en combinaison par application des dispositions qui suivent.

Un objet de l'invention est une structure de véhicule automobile comprenant :
- un châssis,
- une traverse de soutien d'un groupe motopropulseur dudit véhicule,
- une structure porteuse montée sur le châssis et dédiée à la réception du groupe motopropulseur,
- et un support de montage de la traverse, chacune des extrémités de la traverse étant fixée via un dit support à la structure porteuse.

Il est compris ici que les supports sont considérés installés sur le châssis tel qu'il vient d'être mentionné, pour apprécier les caractéristiques et/ou la ou les fonctions du support, ainsi que les résultats qu'il procure.

Dans ce contexte selon l'invention, au moins un dit support est muni d'un impacteur de choc qui est orienté transversalement sur le châssis vers au moins un élément structurel équipant le châssis, contre lequel dit au moins un élément structurel l'impacteur de choc est apte à prendre appui en cas de choc supporté par le châssis essentiellement suivant sa direction longitudinale d'extension.

Il est compris ici que ledit choc longitudinal est potentiellement un choc longitudinal décalé tel que précédemment défini. Le choc peut être un choc frontal appliqué contre l'avant du châssis ou un choc arrière appliqué contre l'arrière du châssis, l'invention étant applicable dans le cadre d'une structure porteuse installée dans un compartiment moteur indifféremment localisé à l'avant ou à l'arrière du châssis. Ledit élément structurel est potentiellement constitué d'un élément de carrosserie habillant le châssis et/ou d'un élément d'armature formant par exemple un renfort de fixation sur le châssis d'un accessoire du véhicule.

L'impacteur de choc forme un frein à l'encontre d'une mobilité de la traverse sur la structure porteuse provoquée sous l'effet d'un effort de poussée généré par ledit choc et appliqué contre le châssis et/ou contre le groupe motopropulseur. Plus particulièrement sous l'effet dudit effort de poussée, l'impacteur de choc prend longitudinalement appui contre le ou les éléments structuraux transversalement situé sur le châssis entre son côté latéral et un plan longitudinal/vertical d'extension du châssis bordé par l'extrémité de la traverse.

L'impacteur de choc s'oppose alors à un glissement du support longitudinalement sur le châssis le long dudit au moins un élément structurel. La traverse est retenue via l'impacteur de choc à l'encontre de son déplacement vers l'habitacle et donc à l'encontre d'un déplacement du groupe motopropulseur vers l'habitacle. Une déformation et/ou une résistance dudit élément structurel sous l'effet de l'impact qu'il subit via l'impacteur de choc, permet aussi d'absorber l'énergie développée par le choc à l'encontre de la mobilité de la traverse.

Dans le cas fréquent où ledit choc est un choc longitudinal décalé, le choc tend à repousser vers l'habitacle une première extrémité de la traverse située du côté latéral du châssis vers lequel ledit choc longitudinal décalé est orienté, la traverse pivotant alors sur la structure porteuse à son autre deuxième extrémité. L'impacteur de choc prend alors appui contre ledit élément structurel et par suite s'oppose à une mobilité en pivotement de la traverse sur la structure porteuse à sa deuxième extrémité, notamment suivant le plan d'extension longitudinal/transversal du châssis, en retenant la première extrémité de la traverse à l'encontre de son refoulement vers l'habitacle.

Selon une forme de réalisation, ledit au moins un élément structurel est formé d'un élément de carrosserie ménageant un passage de roue du véhicule. Dans ce cas sous l'effet d'un déplacement de la traverse transversalement sur le châssis susceptible d'être provoqué par l'effort de poussée développé par ledit choc, l'impacteur de choc forme un percuteur qui perfore l'élément de carrosserie et par suite qui provoque son déchirement à l'encontre d'une mobilité de la traverse au moins longitudinalement sur le châssis vers l'habitacle.

Selon une forme de réalisation, ledit au moins un élément structurel est formé d'un renfort de fixation sur le châssis d'un accessoire du véhicule, tel que par exemple un renfort de fixation d'un organe de suspension d'un essieu du véhicule.

De préférence, par rapport à la position de l'impacteur de choc sur le châssis, ledit élément de carrosserie est longitudinalement plus proche de l'impacteur de choc que ledit renfort de fixation. Autrement dit, ledit renfort de fixation est disposé en aval dudit élément de carrosserie suivant la direction d'application dudit choc longitudinal contre le châssis, ou en d'autres termes suivant le sens de la course suivie par l'impacteur de choc sur le châssis sous l'effet dudit choc longitudinal potentiellement décalé.

Par exemple dans le cas préféré où la structure porteuse est disposée à l'avant du véhicule, ledit renfort de fixation est disposé à l'arrière dudit élément de carrosserie suivant l'extension longitudinale du châssis d'avant en arrière.

Par suite de la disposition relative sur le châssis entre le renfort de fixation et l'élément de carrosserie par rapport à l'impacteur de choc, l'impacteur de choc prend premièrement appui contre l'élément de carrosserie en le percutant transversalement et en le déformant, notamment par déchirement longitudinal. Puis selon l'amplitude du choc, la course poursuivie par l'impacteur de choc provoque secondairement sa prise d'appui contre ledit renfort de fixation. Le renfort de fixation étant réputé plus robuste qu'un élément de carrosserie, le renfort de fixation est plus apte à stopper la course de l'impacteur de choc préalablement freiné sous l'effet de la déformation de l'élément de carrosserie.

Selon l'invention, un bord de l'impacteur de choc orienté vers ledit élément structurel est incliné dans le plan longitudinal et transversal d'extension du châssis. Ledit bord incliné de l'impacteur de choc ménage une rampe de prise d'appui progressif de l'impacteur de choc contre ledit au moins un élément structurel sous l'effet dudit choc.

Plus spécifiquement, il est pris en compte d'une part les positions relatives susvisées de l'élément de carrosserie et du renfort de fixation par rapport à l'impacteur de choc et d'autre part une déformation globale du support provoquée sous l'effet du choc longitudinal. Dans ce contexte, ledit bord incliné de l'impacteur de choc ménage une rampe de pénétration progressive de l'impacteur de choc à travers ledit au moins un élément de carrosserie sous l'effet dudit choc longitudinal potentiellement décalé.

Selon une forme de réalisation, le support est formé d'un corps alvéolé qui est prolongé par l'impacteur de choc vers ledit au moins un élément structurel suivant la direction transversale d'extension du châssis.

Le corps alvéolé procure par sa déformation une absorption des efforts générés par ledit choc préalablement à la mise en oeuvre de l'impacteur de choc, et part suite entraîne une prise d'appui de l'impacteur de choc contre ledit élément structurel. Dans le cas où l'élément structurel le plus proche de l'impacteur de choc est ledit élément de carrosserie, la déformation du corps alvéolé favorise ainsi une pénétration de l'impacteur de choc à travers l'élément de carrosserie.

Selon une forme de réalisation, l'impacteur de choc est formé d'une platine qui est intégrée au support et qui s'étend dans son plan parallèlement au plan d'extension longitudinal et transversal du châssis.

Selon une forme spécifique de réalisation, il est notamment pris en considération le cas particulier d'un choc longitudinal décalé vers le côté latéral droit du châssis. Dans ce cas, la traverse est fixée à la structure porteuse via des dits supports équipant respectivement chacune de ses extrémités. Au moins le support disposé au côté latéral droit du châssis est muni dudit impacteur de choc.

L'invention a aussi pour objet un véhicule automobile caractérisé en ce que le véhicule comprend une structure telle que précédemment décrite, et est équipé d'un groupe motopropulseur monté sur la structure porteuse. Le groupe motopropulseur est plus spécifiquement un groupe motopropulseur du type comprenant au moins une machine électrique fournissant au moins en partie une énergie électrique propulsive du véhicule.

Selon une forme de réalisation, le groupe motopropulseur est soutenu par la traverse en suspension en étant fixé sous la traverse ou autrement dit en étant fixé à la face de la traverse orientée vers le plan de roulage du véhicule.

Un exemple de réalisation de la présente invention va être décrit en relation avec les figures des planches annexées, dans lesquelles :
- la figure 1 est une illustration en perspective d'une structure porteuse d'un groupe motopropulseur sur le châssis d'un véhicule automobile.
- la figure 2 est une vue de dessus de la structure porteuse représentée sur la figure 2, en position de soutien en suspension du groupe motopropulseur.
- la figure 3 est une illustration en perspective d'un support de fixation d'une traverse sur la structure porteuse représentée sur les figures 1 et 2.
- la figure 4 est une illustration d'un impacteur de choc équipant le support représenté sur la figure 3, en situation de percussion d'un élément de carrosserie lors d'un choc longitudinal supporté par le châssis du véhicule.

Les figures et leurs descriptions détaillées exposent l'invention selon des modalités particulières qui ne sont pas restrictives quant à la portée de l'invention telle que définie par les revendications. Les figures et leurs descriptions détaillées d'un exemple de réalisation de l'invention peuvent servir à mieux la définir, si besoin en relation avec la description générale qui vient d'en être faite.

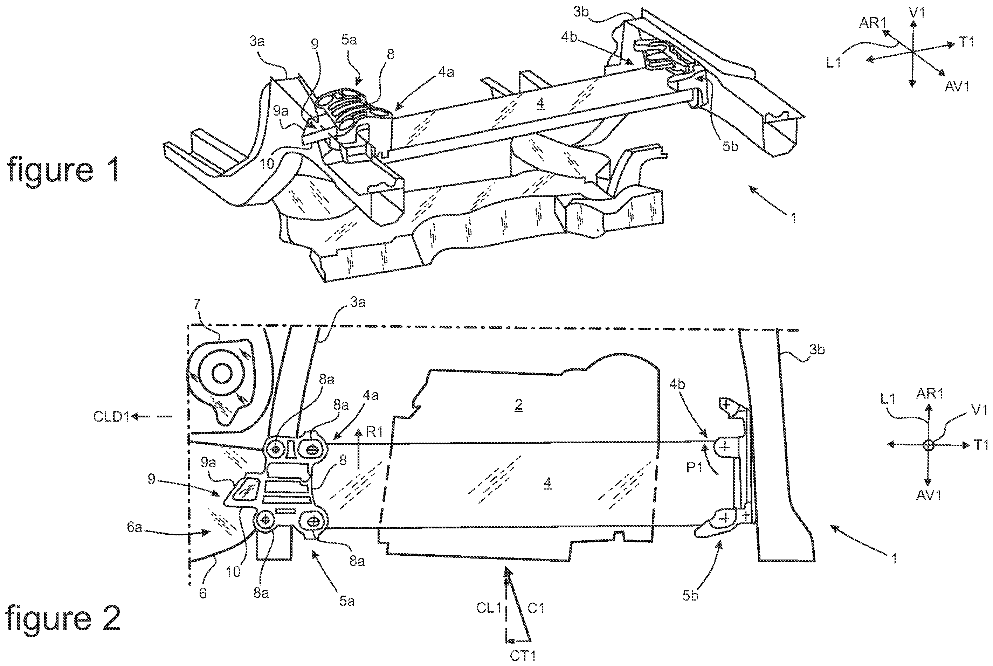

Sur les figures 1 et 2, une structure porteuse 1 est dédiée à l'installation d'un groupe motopropulseur 2 sur le châssis d'un véhicule automobile. Selon l'exemple illustré, la structure porteuse 1 est configurée pour être installée dans un compartiment moteur ménagé par le châssis à l'avant AV1 du véhicule.

Le châssis s'étend suivant les trois directions d'un repère orthonormé, comprenant une direction longitudinale L1 d'extension du châssis entre l'arrière AR1 et l'avant AV1 du véhicule 1, une direction transversale T1 d'extension du châssis entre ses côtés latéraux droit et gauche et une direction verticale V1 d'extension en élévation du châssis par rapport au plan de roulage du véhicule au sol. Un tel référentiel orthonormé est appliqué à la description de l'invention, notamment au regard de la structure porteuse 1 ainsi que des positions relatives entre différents éléments de structure que comprend et/ou qui équipent le châssis.

La structure porteuse 1 est formée d'un berceau de réception du groupe motopropulseur 2, qui est muni de brancards 3a, 3b latéraux s'étendant sensiblement longitudinalement sur le châssis. Une traverse 4 est montée sur la structure porteuse 1 via ses extrémités 4a, 4b suivant la direction principale d'extension de la traverse 4, au moyen de supports 5a, 5b qui sont conjointement fixés aux brancards 3a, 3b et aux extrémités 4a, 4b de la traverse 4 auxquelles les supports 5a, 5b sont respectivement affectés.

Tel qu'illustré sur la figure 2, la traverse 4 soutient en suspension le groupe motopropulseur 2, qui est fixé sous la traverse 4 à sa face orientée vers le plan de roulage du véhicule. Le groupe motopropulseur 2 est notamment du type générateur d'énergie électrique qui est exploitée pour fournir au moins en partie l'énergie nécessaire à la propulsion du véhicule.

Sur les figures 1 et 2, un premier support 5a est disposé à une première extrémité 4a de la traverse 4, en étant monté en chevauchement sur la face supérieure de la première extrémité 4a de la traverse 4 et sur la face supérieure du brancard 3a qui lui est affecté. Autrement dit par rapport au plan de roulage du véhicule, le premier support 5a est fixé en position de surplomb et en contact contre les faces supérieures de la première extrémité 4a de la traverse 4 et du brancard 3a qui lui est affecté. Un deuxième support 5b est disposé à une deuxième extrémité 4b de la traverse 4, en étant fixé conjointement en bout de la deuxième extrémité 4b de la traverse 4 et contre une face latérale du brancard 3b qui lui est affecté. Les supports 5a, 5b sont notamment fixés à la traverse 4 et aux brancards 3a, 3b, tel que par boulonnage ou par vissage.

Sur la figure 2, le premier support 5a est placé transversalement T1 proche d'éléments structuraux 6, 7 montés sur le châssis, comprenant un élément de carrosserie 6 et un renfort de fixation 7 d'un accessoire du véhicule. L'élément de carrosserie 6 est situé à l'avant AV1 du renfort de fixation 7 suivant l'extension longitudinale L1 du véhicule.

L'élément de carrosserie 6 ménage un passage de roue 6a du véhicule, et est disposé transversalement T1 en regard du premier support 5a. Le renfort de fixation 7 est longitudinalement L1 décalé vers l'arrière AR1 par rapport au premier support 5a, et est dédié à la fixation sur le châssis d'un organe de suspension d'un essieu avant du véhicule.

Dans ce contexte en cas d'accident subit par le véhicule, il est considéré un choc C1 frontal appliqué à l'avant AV1 contre le châssis et/ou le groupe motopropulseur 2, essentiellement suivant la direction longitudinale L1 d'extension du châssis. Comme illustré, un tel choc C1 est potentiellement décalé vers le côté latéral droit CLD1 du châssis considéré au regard du conducteur en station de conduite du véhicule. Dans ce cas, le choc C1 génère un effort de poussée contre le châssis et/ou contre le groupe motopropulseur 2, essentiellement, essentiellement suivant une composante de poussée longitudinale CL1 et potentiellement aussi suivant une composante de poussée transversale CT1.

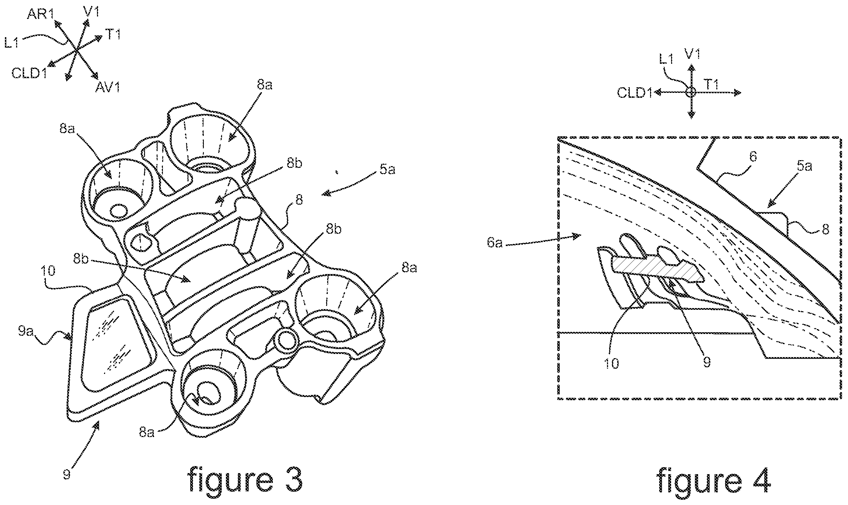

Comme plus particulièrement visible sur la figure 3, le premier support 5a est formé d'un corps alvéolé 8 intégrant un impacteur de choc 9. L'impacteur de choc 9 est formé d'une platine 10 orientée dans son plan parallèlement au plan d'extension longitudinal L1 et transversal T1 du châssis. L'impacteur de choc 9 s'étend transversalement depuis le corps 8 du premier support 5a en direction du côté latéral droit CLD1 du châssis, sensiblement depuis le brancard 3a vers l'élément de carrosserie 6 ménageant le passage de roue 6a.

Le corps 8 est globalement de conformation parallélépipédique et les alvéoles 8a, 8b que comporte le corps 8 le traversent verticalement V1. Des alvéoles 8a ménagées en coin du corps 8 comportent un fond et sont exploitées pour la fixation du premier support 5a sur la traverse 4 et sur le brancard 3a. Des alvéoles 8b ménagées en zone centrale du corps 8 s'étendent essentiellement transversalement T1.

Une telle configuration du corps 8 favorise son écrasement sous l'effet du choc C1, le corps 8 absorbant ainsi en partie l'énergie développée par le choc C1. Comme référencé sur la figure 2, la poussée générée par le choc C1 et subie par le châssis et/ou le groupe motopropulseur 2, tend à provoquer un pivotement P1 de la traverse 4 sur la structure porteuse 1 à sa deuxième extrémité 4b, et par suite à refouler R1 la première extrémité 4a de la traverse 4 longitudinalement L1 vers l'habitacle du véhicule.

Sous l'effet du choc C1, la déformation du corps 8 et/ou le refoulement R1 de la première extrémité 4a de la traverse 4 génèrent une amorce d'un déplacement transversal T1 de l'impacteur de choc 8 vers le côté latéral droit CLD1 du châssis, et donc vers l'élément de carrosserie 6 ménageant le passage de roue 6a. Un tel déplacement transversal T1 de l'impacteur de choc 9 est d'autant plus prononcé lorsque le choc C1 est décalé vers la droite.

Comme illustré sur la figure 4 en cas de choc C1, l'impacteur de choc 9 vient alors percuter et traverser l'élément de carrosserie 6 ménageant le passage de roue 6a. L'impacteur de choc 9 pénètre à l'intérieur du passage de roue 6a, avec pour effet de déformer l'élément de carrosserie 6 en faisant obstacle au refoulement R1 de la traverse 4 vers l'habitacle.

Comme illustré sur les figures 1 à 3, le bord 9a de l'impacteur de choc 9 orienté vers l'élément de carrosserie 6 est incliné par rapport à la direction longitudinale L1 d'extension du châssis. L'inclinaison du bord 9a de l'impacteur de choc 9 confère à l'impacteur de choc 9 une configuration en lame dont le tranchant est incliné dans un plan longitudinal L1 et transversal T1. Une telle lame ménage une rampe de prise d'appui progressif de l'impacteur de choc 6 contre l'élément de carrosserie 6. Par suite, la pénétration de l'impacteur de choc 9 à travers l'élément de carrosserie 6 vers le passage de roue 6a et son déchirement par l'impacteur de choc 9 en sont facilités, jusqu'à mise en butée du corps 8 de l'impacteur de choc 9 contre l'élément de carrosserie 6.

En revenant à la figure 2 et en cas de choc C1 de forte amplitude, le refoulement R1 de la première extrémité 4a de la traverse 4 est accentué. Le premier support 5a est alors entraîné par la traverse 4 longitudinalement L1 vers l'habitacle. Par suite, l'impacteur de choc 9 est déplacé longitudinalement L1 et provoque un déchirement de l'élément de carrosserie 6 en direction du renfort de fixation 7. L'impacteur de choc 9 poursuit sa course vers le renfort de fixation 7 qu'il percute, avec pour effet de ralentir voire de stopper la course de l'impacteur de choc 9, et donc le refoulement R1 de la première extrémité 4a de la traverse 4 vers l'habitacle.

## Revendications

1. Structure de véhicule automobile comprenant :
- un châssis,
- une traverse (4) de soutien d'un groupe motopropulseur (2) dudit véhicule,
- une structure porteuse (1) montée sur le châssis et dédiée à la réception du groupe motopropulseur (2),
- et un support (5a,5b) de montage de la traverse (4), chacune des extrémités (4a,4b) de la traverse (4) étant fixée via un dit support (5a,5b) à la structure porteuse (1),
au moins un dit support (5a) étant muni d'un impacteur de choc (9) qui est orienté transversalement (T1) sur le châssis vers au moins un élément structurel (6,7) équipant le châssis, contre lequel dit au moins un élément structurel (6,7) l'impacteur de choc (9) est apte à prendre appui en cas de choc (C1) supporté par le châssis essentiellement suivant sa direction longitudinale (L1) d'extension, **caractérisé en ce qu'**un bord (9a) de l'impacteur de choc (9) orienté vers ledit élément structurel (6,7) est incliné dans le plan longitudinal (L1) et transversal (T1) d'extension du châssis, ledit bord (9a) incliné de l'impacteur de choc (9) ménageant une rampe de prise d'appui progressif de l'impacteur de choc (9) contre ledit au moins un élément structurel (6,7) sous l'effet dudit choc (C1).

2. Structure de véhicule selon la revendication 1, **caractérisé en ce que** ledit au moins un élément structurel (6,7) est formé d'un élément de carrosserie (6) ménageant un passage de roue (6a) du véhicule.

3. Structure de véhicule selon l'une quelconque des revendications 1 et 2, **caractérisé en ce que** ledit au moins un élément structurel (6,7) est formé d'un renfort de fixation (7) sur le châssis d'un accessoire du véhicule.

4. Structure de véhicule selon les revendications 2 et 3, **caractérisé en ce que** par rapport à la position de l'impacteur de choc (9) sur le châssis, ledit élément de carrosserie (6) est longitudinalement (L1) plus proche de l'impacteur de choc (9) que ledit renfort de fixation (7).

5. Structure de véhicule selon l'une quelconque des revendications 1 à 4, **caractérisé en ce que** le support (5a) est formé d'un corps alvéolé (8) qui est prolongé par l'impacteur de choc (9) vers ledit au moins un élément structurel (6,7) suivant la direction transversale (T1) d'extension du châssis.

6. Structure de véhicule selon l'une quelconque des revendications 1 à 5, **caractérisé en ce que** l'impacteur de choc (9) est formé d'une platine (10) qui est intégrée au support (5a) et qui s'étend dans son plan parallèlement au plan longitudinal (L1) et transversal (T1) d'extension du châssis.

7. Structure de véhicule selon l'une des revendications précédentes, **caractérisé en ce que** au moins le support (5a) disposé au côté latéral droit (CLD1) du châssis est muni dudit impacteur de choc (9).

8. Véhicule automobile **caractérisé en ce que** le véhicule comprend une structure selon l'une des revendications précédentes, et est équipé d'un groupe motopropulseur (2) monté sur la structure porteuse (1).

## Patentansprüche

1. Kraftfahrzeugstruktur bestehend aus :
- ein Fahrgestell,
- einen Querträger (4) zum Tragen eines Antriebsstrangs (2) des Fahrzeugs,
- eine Tragstruktur (1), die am Fahrgestell montiert ist und zur Aufnahme des Antriebsstrangs (2) bestimmt ist,
- und eine Stütze (5a, 5b) zur Montage des Querträgers (4), wobei jedes der Enden (4a, 4b) des Querträgers (4) über die Stütze (5a, 5b) an der Struktur befestigt ist Träger (1),
wobei mindestens eine Stütze (5a) mit einem Stoßkörper (9) versehen ist, der quer (T1) am Fahrgestell auf mindestens ein Strukturelement (6, 7) ausgerichtet ist, mit dem das Fahrgestell ausgestattet ist und an dem das mindestens eine Strukturelement anliegt (6,7) Der Stoßschlagkörper (9) ist in der Lage, im Falle eines Aufpralls (C1) mit Unterstützung durchzugreifen das Chassis im Wesentlichen entlang seiner Längserstreckungsrichtung (L1) verläuft, **dadurch gekennzeichnet, dass** eine zum Strukturelement (6,7) gerichtete Kante (9a) des Stoßstoßkörpers (9) in der Längsebene (L1) und quer ( T1) Verlängerung des Fahrgestells, wobei die geneigte Kante (9a) des Stoßstoßkörpers (9) eine progressive Stützrampe für den Stoßstoßkörper (9) bereitstellt gegen das mindestens eine Strukturelement (6,7) unter der Wirkung des Stoßes (C1).

2. Fahrzeugstruktur nach Anspruch 1, **dadurch gekennzeichnet, dass** das mindestens eine Strukturelement (6, 7) aus einem Karosserieelement (6) gebildet ist, das einen Radkasten (6a) des Fahrzeugs bildet.

3. Fahrzeugstruktur nach einem der Ansprüche 1 und 2, **dadurch gekennzeichnet, dass** das mindestens eine Strukturelement (6, 7) aus einer Befestigungsverstärkung (7) am Chassis eines Fahrzeugzubehörs besteht.

4. Fahrzeugaufbau nach den Ansprüchen 2 und 3, **dadurch gekennzeichnet dass** das Karosserieelement (6) im Hinblick auf die Position des Stoßdämpfers (9) am Fahrgestell in Längsrichtung (L1) näher am Stoßdämpfer (9) liegt als die Befestigungsverstärkung (7).

5. Fahrzeugstruktur nach einem der Ansprüche 1 bis
4, **dadurch gekennzeichnet, dass** der Träger (5a) aus einem Wabenkörper (8) gebildet ist, der durch den Stoßkörper (9) in Richtung des mindestens einen Strukturelements (6,7) verlängert wird der Querausdehnungsrichtung (T1) des Fahrgestells folgend .

6. Fahrzeugstruktur nach einem der Ansprüche 1 bis
5, **dadurch gekennzeichnet, dass** der Stoßstoßkörper (9) aus einer Platte (10) gebildet ist, die in den Träger (5a) integriert ist und sich in seiner Ebene parallel zur Ebene erstreckt Längs- (L1) und Querausdehnung (T1) des Fahrgestells.

7. Fahrzeugstruktur nach einem der vorhergehenden Ansprüche, gekennzeichnet , dass zumindest der an der rechten Seitenseite (CLD1) des Fahrgestells angeordnete Träger (5a) mit dem Stoßdämpfer (9) versehen ist.

8. Kraftfahrzeug, **dadurch gekennzeichnet, dass** das Fahrzeug umfasst a Struktur nach einem der vorhergehenden Ansprüche, und ist mit einem an der Tragstruktur (1) montierten Antriebsaggregat (2) ausgestattet.

## Claims

1. Motor vehicle structure comprising:
- a chassis,
- a cross member (4) supporting a power unit (2) of said vehicle,
- a supporting structure (1) mounted on the chassis and dedicated to receiving the powertrain (2),
- and a support (5a,5b) for mounting the crosspiece (4), each of the ends (4a,4b) of the crosspiece (4) being fixed via a said support (5a,5b) to the structure
carrier (1),
at least one said support (5a) being provided with a shock impactor (9) which is oriented transversely (T1) on the chassis towards at least one structural element (6,7) equipping the chassis, against which said at least one structural element (6,7) the shock impactor (9) is able to bear in the event of an impact (C1) supported by the chassis essentially along its longitudinal direction (L1) of extension, **characterized in that** an edge (9a) of the impact impactor (9) oriented towards said structural element (6,7) is inclined in the longitudinal plane (L1) and transverse plane (T1) of extension of the chassis, said inclined edge (9a) of the impact impactor (9) providing a progressive support ramp for the impact impactor (9) against said at least one structural element (6,7) under the effect of said impact (C1).

2. Vehicle structure according to claim 1, **characterized in that** said at least one structural element (6,7) is formed of a bodywork element (6) providing a wheel arch (6a) of the vehicle.

3. Vehicle structure according to any one of claims 1 and 2, **characterized in that** said at least one structural element (6,7) is formed of a fixing reinforcement (7) on the chassis of an accessory of the vehicle.

4. Vehicle structure according to claims 2 and 3, **characterized in that** with respect to the position of the impact impactor (9) on the chassis, said bodywork element (6) is longitudinally (L1) closer to the impact impactor (9) than said fixing reinforcement (7).

5. Vehicle structure according to any one of claims 1 to 5.
4, **characterized in that** the support (5a) is formed of a honeycomb body (8) which is extended by the shock impactor (9) towards said at least one structural element (6,7) following the transverse direction (T1) of extension of the chassis.

6. Vehicle structure according to any one of claims 1 to 6.
5, **characterized in that** the shock impactor (9) is formed of a plate (10) which is integrated into the support (5a) and which extends in its plane parallel to the plane longitudinal (L1) and transverse (T1) extension of the chassis.

7. Vehicle structure according to one of the preceding claims, **characterized in that** at least the support (5a) arranged on the right lateral side (CLD1) of the chassis is provided with said shock impactor (9).

8. Motor vehicle **characterized in that** the vehicle comprises a structure according to one of the preceding claims, and is equipped with a power unit (2) mounted on the supporting structure (1).
